(19)

Europäisches
Patentamt
European
Patent Office
Office européen
des brevets

(11) **EP 4 001 633 A1**

(12) **EUROPEAN PATENT APPLICATION**
published in accordance with Art. 153(4) EPC

(43) Date of publication:
**25.05.2022 Bulletin 2022/21**

(21) Application number: **19938072.6**

(22) Date of filing: **15.07.2019**

(51) International Patent Classification (IPC):
**F03B 13/08** (2006.01)    **F03B 13/06** (2006.01)
**F03B 17/06** (2006.01)    **F03B 11/00** (2006.01)

(52) Cooperative Patent Classification (CPC):
**F03B 11/00; F03B 13/06; F03B 13/08; F03B 17/06;**
Y02E 10/20; Y02E 60/16

(86) International application number:
**PCT/KR2019/008728**

(87) International publication number:
**WO 2021/010510 (21.01.2021 Gazette 2021/03)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Heo, Kyu-hwe**
**Pusan city 49103 (KR)**

(72) Inventor: **Heo, Kyu-hwe**
**Pusan city 49103 (KR)**

(74) Representative: **Herrero & Asociados, S.L.**
**Cedaceros, 1**
**28014 Madrid (ES)**

(54) **PUMPED-STORAGE HYDROELECTRIC POWER STATION HAVING PIPE INSTALLED SUCH THAT BOTH ENDS OF PIPE HAVE DIFFERENT HEIGHTS, THEREBY INDUCING FLUID FLOW INSIDE PIPE, AND UTILIZING FLUID FLOW**

(57)    (1) Technical field of the invention described in the claims: natural laws regarding water flowing from a high place to a low place, and fluid dynamics regarding potential energy of water. (2) Technical objectives to be solved by the invention: A. Simultaneously producing electric power and pumping up water; B. Installing hydroelectric power stations in unlimited places, that is, guaranteeing that hydroelectric power stations can be installed anywhere; C. Guaranteeing that electricity is produced 24 hours a day, 365 days a year; D. Ending thermal power generation, nuclear power generation, photovoltaic power generation, and wind power generation. (3) The gist of a method for resolving the technical objectives: to guarantee that, in the course of water at a high level falling into a pipe, multiple generators installed in the pipe are operated, thereby producing electric power, that is, the gist is to increase the total amount of produced electric power. This is because the total amount of produced electric power can be increased as desired, while electric power (that is, cost) necessary for pumping up water that has fallen to the original high level is fixed. That is, the number of generators installed in the pipe can be increased as desired (to 100 or 1,000). (4) Important use of the invention: creation of a new-concept pumped-storage hydroelectric power station.

EP 4 001 633 A1

FIG. 1

*** WATER FLOWS COUNTERCLOCKWISE ***

high end

low end

WIRE

: WATER TURBINE

: GENERATOR

: GENERATION SET

...... : Meaning that multiple generation sets are installed continuously

Water turbine for power generation   outside pipe

Generator outside pipe

**Description**

**(1) Technical Field**

Laws of nature regarding water flowing from a high place to a low place

Fluid dynamics regarding potential energy of water

**(2) Background Art**

Conventional hydroelectric power stations have many restrictions on power production time and installation place. Power production is often interrupted due to various reasons, and it is not possible to install power stations anywhere. Such problems have to be overcome.

**Background Literature**

[Literature] Power Generation Hydroelectric Exercises supervised by Power Generation Division of KEPCO and issued by Gumi Technology, First Edition Published on July 10, 1994

**(3) Detailed Description of the Invention**

(3)-1 Objectives to Be Solved: Enabling a pumped-storage hydroelectric power station to simultaneously produce electric power and pump water and to be installed without restrictions on location.

(3)-2 Solutions

******Start of Means for Solving Problems******

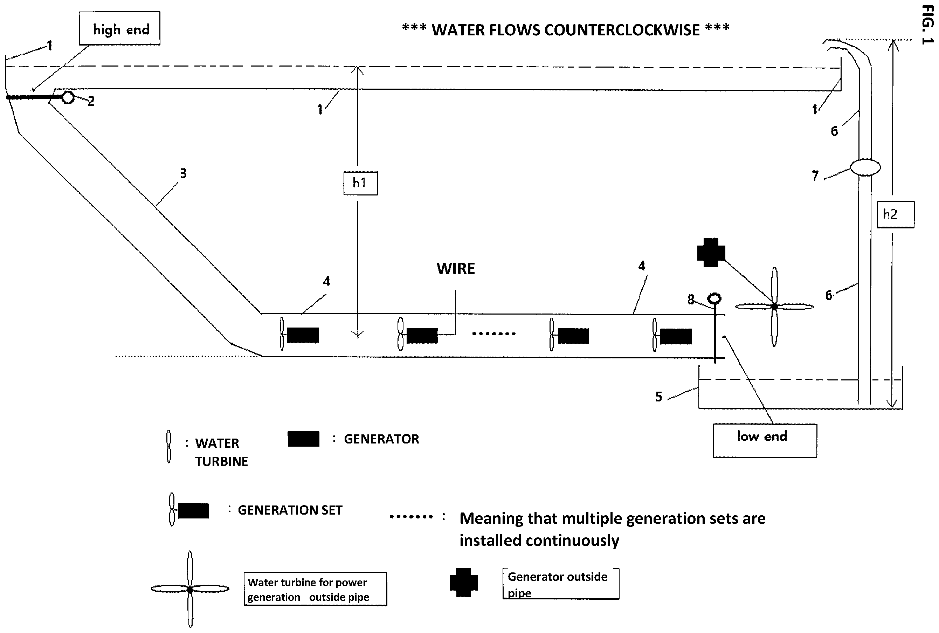

A pumped-storage hydroelectric power station includes an upper tank 1 that allows water to fall into an inclined pipe 3 illustrated in FIG. 1 and stores water which rises through a riser pipe 6,

the inclined pipe 3 which receives water falling from the upper tank 1 illustrated in FIG. 1 and through which the water flows to a horizontal pipe 4 illustrated in FIG. 1,

the horizontal pipe 4 which receives water from the inclined pipe 3 illustrated in FIG. 1 and through which the water flows to a lower tank 5 illustrated in FIG. 1,

the lower tank 5 to which water is supplied from the horizontal pipe 4 illustrated in FIG. 1 and through which the water flows to the riser pipe 6,

the riser pipe 6 and a pump 7 which pump water in the lower tank 5 illustrated in FIG. 1 to the upper tank 1,

a valve A 2 and a valve B 8 in FIG. 1 which control flow of water illustrated in FIG. 1, and

generators installed inside a pipe illustrated in FIG. 1.

The basic concept is as follows.

******Start of Basic Concept******

When the upper tank 1, the inclined pipe 3, the horizontal pipe 4, and the lower tank 5 illustrated in FIG. 1 are sufficiently filled with water, then, the valve A 2 and the valve B 8 are simultaneously opened, and the pump 7 illustrated in FIG. 1 is simultaneously turned and simultaneously the upper tank 1 illustrated in FIG. 1 is sufficiently filled with water continuously, water continuously flows counterclockwise in all of the pipes illustrated in FIG. 1, and water continuously enters and flows out of all of the tanks illustrated in FIG. 1.

======Start of Further Description=================

In this case, when a water level of the upper tank 1 illustrated in FIG. 1 reaches a demanded level, that is, h1 illustrated in FIG. 1, water is not supplied to the upper tank 1 any longer. When the water level of the upper tank 1 illustrated in FIG. 1 is observed and goes out of the demanded level, water is appropriately supplied or collected to reach the demanded level.

======End of Further Description==================

As described above, water continuously flows counterclockwise in all of the pipes illustrated in FIG. 1, and water continuously enters and flows out of all of the tanks illustrated in FIG. 1.

In this manner, the multiple generators installed inside the horizontal pipe 4 illustrated in FIG. 1 continuously produce power.

That is, production of electric power and pumping of water can be simultaneously performed, and the power station can be installed anywhere.

Here, when the total amount of generated electric power produced when water flows through the horizontal pipe 4 illustrated in FIG. 1 is still larger than electric power consumption to pump water from the lower tank 5 illustrated in FIG. 1 to the upper tank 1, the objectives can be solved. That is, the production of electric power and the pumping of water can be simultaneously performed, and the power station can be installed anywhere.

******End of Basic Concept******

Detailed description is as follows.

When a volumetric flow rate in the horizontal pipe 4 having water flow illustrated in FIG. 1 is set to Q ($m^3$/sec), a mass flow rate of 1 $m^3$ of water is 1,000Q (kg/sec) since 1 $m^3$ of water is 1,000 kg, and electric power to enable water in the lower tank 5 illustrated in FIG. 1 to rise by h2 (m) illustrated in FIG. 1 is 1,000Q (kg/sec) $\times$ 9.8 ($m/sec^2$) $\times$ h2 in accordance with (Potential Energy = Mass $\times$ g $\times$ Height).

$$= 1,000Q \times 9.8 \times h2 \text{ (unit is joule/sec, that is, watt)}$$

$$= 9.8 \times Q \times h2 \text{ (KW) ------ Theoretical Pumped-Storage Power Consumption}$$

In accordance with Table 1.1 on p. 5 in the following background literature, Actual Pumped-Storage Power Consumption = Theoretical Pumped-Storage Power Consumption/(0.72 to 0.85), and refer to the following background literature regarding the theoretical pumped-storage power consumption.

Refer to Expression (1.2) on p. 2 in [Literature] Power Generation Hydroelectric Exercises supervised by Power Generation Division of KEPCO and issued by Gumi Technology, First Edition Published on July 10, 1994.

When the volumetric flow rate of water falling into the lower tank 5, that is, the volumetric flow rate of water pumped to the upper tank 1 is LQ ($m^3$/sec), ------ LQ

Theoretical Pumped-Storage Power Consumption = 9.8 $\times$ LQ $\times$ h2 in FIG. 1 (KW)

Hence, Actual Pumped-Storage Power Consumption = {9.8 $\times$ LQ $\times$ h2 in FIG. 1/(0.72 to 0.85)} (KW) ------ RLC

When the total electric power produced while water flows through the horizontal pipe 4 illustrated in FIG. 1 is still larger than the actual pumped-storage power consumption (RLC), the effectiveness of the present invention is proved, and thus the present invention has to be accepted as a registered patent.

Based on the above-mentioned basic concept and the nature of water which flows from a high place to a low place, when water is continuously supplied from the upper tank 1 illustrated in FIG. 1 to a high end, water continuously flows from the high end to a low end, passes through the low end, goes out of the horizontal pipe 4 illustrated in FIG. 1, and falls into the lower tank 5 illustrated in FIG. 1.

So far as the horizontal pipe 4 is not blocked, despite many generators in the horizontal pipe 4 illustrated in FIG. 1, water continuously falls into the lower tank 5 illustrated in FIG. 1 as described above.

If the flow velocity is decreased after water passes through the first left generator in the horizontal pipe 4 illustrated in FIG. 1 --- Assumption,

the flow velocity is more decreased after water passes through the second generator, and the flow velocity is continuously decreased as water flows through the third and fourth generators, that is, toward a right side of the horizontal pipe 4.

If infinitely many generators are installed inside the horizontal pipe 4 illustrated in FIG. 1, the flow velocity at the low end illustrated in FIG. 1 reaches zero.Conclusion

However, since water always flows from a high place to a low place, the flow velocity at the low end illustrated in FIG. 1 cannot reach zero. ------ Actual Conclusion

Since the conclusion differs from the actual conclusion, the conclusion is an error.

Then, the assumption, on which the conclusion confirmed as the error is based, turns out to be an error.

Consequently, when water is caused to continuously fall from the upper tank 1 illustrated in FIG. 1 to the high end illustrated in FIG. 1, even when numerous generators are installed inside the horizontal pipe 4 illustrated in FIG. 1, the flow velocity is not decreased in the entire horizontal pipe 4 illustrated in FIG. 1, equal flow velocity is maintained, and water continuously passes through the low end illustrated in FIG. 1 and falls into the lower tank 5 illustrated in FIG. 1.

An actual amount of power production of one generator at the leftmost side of the horizontal pipe 4 illustrated in FIG. 1 is calculated.

A head is h1 illustrated in FIG. 1.

In accordance with Expression (1.2) on p. 2 in [Literature] Power Generation Hydroelectric Exercises supervised by Power Generation Division of KEPCO and issued by Gumi Technology, First Edition Published on July 10, 1994, when the flow rate for turning a water turbine in the horizontal pipe 4, that is, the flow rate regarding the water turbine, is TQ (m3/sec), TQ has to be lower than a pipe flow rate of the horizontal pipe 4 since a generator water turbine illustrated in FIG. 1 is not allowed to come into contact with a pipe wall.

The rate is defined as TQ = 0.9 × (Pipe Flow Rate of Horizontal Pipe 4) ------ TQ

Theoretical Amount of Power Production = 9.8 × TQ × h1 (KW), and Actual Amount of Power Production is obtained in accordance with Table 1.1 on p. 5 in the same book, (0.72 to 0.85): power production coefficient ------ Power Production Coefficient

```
Actual  Amount  of  Power  Production  =  Theoretical  Amount  of

Power Production × (0.72 to 0.85) (KW)

        = Actual Amount of Power Production of One Generator at
   Leftmost Side of Horizontal Pipe 4 Illustrated in FIG. 1 ----
   -- RTP
```

Additionally, since all underwater generators at the right side of the generator in the horizontal pipe 4 have the same head and the same flow rate, each of the underwater generators produces electric power corresponding to the same RTP.

The number of generators to be installed inside the horizontal pipe 4 illustrated in FIG. 1 can be selected as sufficiently many as desired.

The gist of the present invention is that the total actual amount of power production, that is, total RTP, is larger than RLC by installing many generators inside the horizontal pipe 4 illustrated in FIG. 1 as illustrated in FIG. 1 even when the actual pumped-storage power consumption, that is, RLC, is large and RTP for each generator is smaller. The number of generators to be installed can be 10, can be 100, even can be 150. That is, there is no limit to the number of generators. Consequently, since unlimited total RTP is provided and RLC is constant, the present invention can be realized and is very efficient.

Since water continuously flows from a high place to a low place unconditionally, even when an infinite number of generators inside the horizontal pipe 4 illustrated in FIG. 1, water which falls from the upper tank 1 illustrated in FIG. 1 continuously flows into the lower tank 5 illustrated in FIG. 1. Hence, total RTP, that is, the total actual amount of power production can increase infinitely.

On the other hand, the actual pumped-storage power consumption, that is, RLC, is constant, hence the objectives are completely solved. The present invention proves effective.

Additionally, according to the present invention, since the pump 7 illustrated in FIG. 1 causes water to pass through the riser pipe 6 illustrated in FIG. 1 to the upper tank 1 from the lower tank 5 while water falls from the upper tank 1 illustrated in FIG. 1, power production and pumping of water are simultaneously performed, and water is re-used after power production, the objectives are more completely solved. The present invention proves effective.

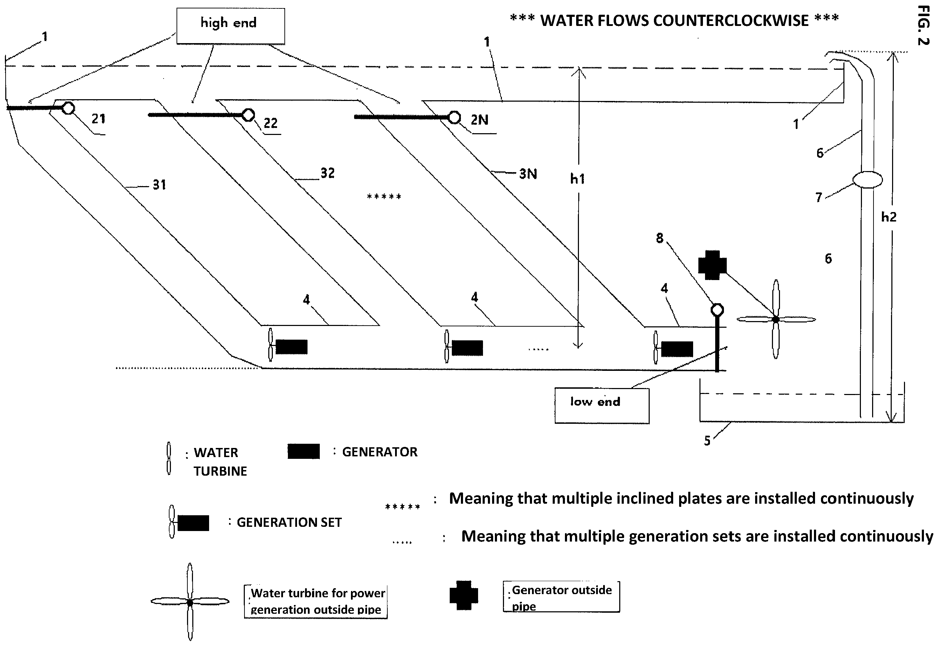

The objectives are completely solved as described above; however, more efficient solutions related to FIG. 2 are introduced as follows.

FIG. 2 differs from FIG. 1 in that multiple, that is, two or more, inclined pipes are provided.

The actual amount of power production of the leftmost generator in FIG. 2 is equal to RTP in FIG. 1; however, the actual amount of power production of the second generator in FIG. 2 is two times the RTP since two times[refer to tip] the flow rate is obtained.

tip: Water flows from two inclined pipes in FIG. 2, that is, both pipes of an inclined pipe 31 and an inclined pipe 32 illustrated in FIG. 2, and thus two times the flow rate is naturally obtained.

The actual amount of power production of the N-th generator illustrated in FIG. 2 is N times the RTP.

Here, the total actual amount of power production in the horizontal pipe 4 illustrated in FIG. 2:

in a case of N inclined pipes and N generators in FIG. 2,

```
RTP + 2 × RTP + ······ + N × RTP

= (1 + 2 + 3 + ······ + N) × RTP

= 55 × RTP (If N is 10)

= Total Actual Amount of Power Production in Horizontal Pipe
  4 Illustrated in FIG. 2 ------ 24TOTRTP
```

Now, an actual amount of outside power production outside the horizontal pipe 4 illustrated in FIG. 2 is calculated.

Since a flow rate for turning an outside generator water turbine is a flow rate of the horizontal pipe 4 at the low end illustrated in FIG. 2 and N inclined pipes are provided, when the flow rate of the horizontal pipe 4 in a case of one inclined pipe is set to 14 ------- 14

the corresponding flow rate is N × 14 ------ N14

then, Actual Amount of Outside Power Production outside Horizontal Pipe 4 Illustrated in FIG. 2 = 9.8 × Corresponding Flow Rate × Head × Power Production Coefficient = 9.8 × N14 × h1 × 0.72 (KW) ------ 24outp

Additionally, since a flow rate of water entering the lower tank 5 illustrated in FIG. 2, that is, a flow rate of water pumped to the upper tank 1, is naturally N14, and a pumped-storage height is h2,

```
Actual Pumped-Storage Power Consumption = 9.8 × Corresponding
Flow Rate × h2/Power Production Coefficient = 9.8 × N14 ×
h2/0.72 ------ 24liftRP
```

and Net Actual Amount of Power Production in FIG. 2 = 24TOTRTP + 24outp - 24liftRP,

a flow rate in the horizontal pipe 4 in a case of one inclined pipe, that is, in a case of FIG. 1, is 1 ($m^3$/sec), that is, TQ is 0.9 ($m^3$/sec), h1 = 50 m, h2 = 60 m, N is 10, that is, ten inclined pipes and ten generators are provided, then, Net Actual Amount of Power Production in FIG. 2

```
= 55 × 9.8 × 0.9 × 50 × 0.72 + 9.8 × 10 × 1 × 50 × 0.72 - 9.8
  × 10 × 1 × 60/0.72

= 12,824 (KW)
```

On the other hand, the total actual amount of power production in the horizontal pipe 4 illustrated in FIG. 1:

in a case of one inclined pipe and N generators in FIG. 1,

```
   RTP + RTP + ‥‥‥ + RTP = N × RTP

   = 10 × RTP (If N is 10)

   = Total Actual Amount of Power Production in Horizontal Pipe
   4 Illustrated in FIG. 1 ------ 14TOTRTP.
```

The actual amount of external power production in FIG. 1 is as follows:

```
   = 9.8 × Corresponding Flow Rate × h1 × 0.72 ------ 14outp

   Actual Pumped-Storage Power Consumption in FIG. 1

   = 9.8 × Corresponding Flow Rate × h2/Power Production
   Coefficient ------ 14liftRP
```

Since one inclined pipe is provided, the flow rate of the horizontal pipe 4 is 14 as set above, TQ is 0.9 when 14 is 1 (m$^3$/sec), h1 = 50 m, h2 = 60 m, and ten generators are provided, and Net Actual Amount of Power Production in FIG. 1 = 14TOTRTP + 14outp - 14liftRP,
then, Net Actual Amount of Power Production in FIG. 1

```
   = 10 × 9.8 × 0.9 × 50 × 0.72 + 9.8 × 1 × 50 × 0.72 - 9.8 × 1 ×
   60/0.72

   = 2,711 (KW)
```

The conclusion provided above is obtained by setting a condition in which a small net actual amount of power production is obtained, and the effectiveness of the present invention can be clearly found from various cases as illustrated in the following table.

Table 1 ***power production unit: KW*** Table 1

| Item | Ratio (See below) | h1 | h2 | Power production coefficient | Net ten generators and ten inclined pipes in FIG.2 | | Net ten generators and one inclined pipe in FIG. 1 |
|---|---|---|---|---|---|---|---|
| 1 | 0.9 | 50 | 55 | 0.8 | 16,587 | **17 MW** | 3,246 |
| 2 | 0.9 | 70 | 75 | 0.8 | 23,466 | **23 MW** | 4,569 |
| 3 | 0.9 | 80 | 85 | 0.8 | 26,906 | **26 MW** | 5,231 |
| 4 | 0.9 | 90 | 95 | 0.8 | 30,346 | **30 MW** | 5,892 |
| 5 | 0.9 | 100 | 105 | 0.8 | 33,786 | **34 MW** | |
| 6 | 0.9 | 110 | 115 | 0.8 | 37,225 | **37 MW** | |
| 7 | 0.9 | 120 | 125 | 0.8 | 40,665 | **41 MW** | |

(continued)

| Item | Ratio (See below) | h1 | h2 | Power production coefficient | Net ten generators and ten inclined pipes in FIG.2 | | Net ten generators and one inclined pipe in FIG. 1 |
|---|---|---|---|---|---|---|---|
| 8 | 0.9 | 150 | 155 | 0.8 | 50,985 | **51 MW** | |
| 9 | 0.9 | 170 | 175 | 0.8 | 57,864 | **58 MW** | |
| 10 | 0.9 | 200 | 205 | 0.8 | 68,184 | **68 MW** | |

**Ratio**: When a flow rate for turning a water turbine inside the horizontal pipe 4, that is, the flow rate regarding the water turbine, is TQ (m³/sec), TQ has to be lower than a pipe flow rate of the horizontal pipe 4 since a generator water turbine inside the horizontal pipe 4 is not allowed to come into contact with a pipe wall.

```
The rate is defined as TQ = 0.9 × (Pipe Flow Rate of Horizontal
Pipe 4)
```

******End of Description of Ratio******

Table 1 provided above shows results obtained when the flow rate inside the horizontal pipe 4 in a case of one inclined pipe is 1 (m³/sec).
When the flow rate is 2 and 3, the following conclusion is derived.
Item No. 6 in Table 1 is calculated for convenience.
When the flow rate is 2 (m³/sec), the net actual amount of power production in FIG. 2 is 74 (MW).
When the flow rate is 3 (m³/sec), the net actual amount of power production in FIG. 2 is 111 (MW).
74 (MW) and 111 (MW) are still larger than 37 (MW) as a result of Item No. 6 in Table 1. ------ 111
When the flow rate is 5 (m³/sec), for Item No. 3 in Table 1 is:
Net Actual Amount of Power Production in FIG. 2 = 135 (MW) -- ---- 135
For reference, the amount of power production of Soyang Dam, which is a large dam in Korea, is 200 (MW) by two generators, and 100 MW by one.
In a case of 111, 111 (MW) is very large for pumped-storage hydroelectric power generation.
Electric power of thermal power plant No. 1 is about 500 (MW), electric power of nuclear power plant No. 1 is about 1,000 (MW), and thus, in the case of 111, 111 (MW) is remarkable for hydroelectric power generation. In a case of 135, 135 (MW) is even larger.
As well known, both the thermoelectric power plant and the nuclear power plant have very complex structures and are very large-scaled, thus, require very high installation costs.
In addition, maintenance costs and management costs are very high and need to be continually paid.
On the other hand, construction costs of the present invention which generates electric power of 111 (MW) and 135 (MW) in cases of 111 and 135 is practically very lower than installation costs for the existing power production.
In addition, the maintenance costs and the management costs of the present invention are still lower than those of the existing power production. Incidentally, multiple generators are operated in the present invention, and thus costs for the generators increase to a certain extent; however, the present invention is very advantageous in the maintenance costs and the management costs in terms of comprehensive calculation.
Additionally, the power station of the present invention can be installed anywhere and can produce electric power 24 hours a day, 365 days a year, thus, it is very highly advantageous than the existing power production methods. The power station of the present invention is incomparable. The difference between the power station of the present invention and the existing power generation methods is equal to or larger than the difference between the degree of doctor and a level of kindergarten.
Table 1 illustrates ten generators as samples and thus can be used just as reference, and 50 to 100 or more generators can be installed as necessary. Then, the total amount of power production is remarkably increased. The increase in power generation is beyond imagination.

\*\*\*\*\*\*End of Means for Solving Problems\*\*\*\*\*\*That is, End of (3)-2\*\*\*\*\*\*

(3)-3 Effects and Advantages of Solutions

1. Installation costs and maintenance costs of the hydroelectric power station are low, and electric power of the hydroelectric power production can be increased 1,000 times or more than current days. This is because, according to the present invention as described in Means for Solving Problems, electric power is produced while water continuously circulates up and down simultaneously, and thus the electric power can be continuously produced only with water stored in the power station without water supply from outside the power station. That is, the hydroelectric power station can be installed anywhere.
In other words, the hydroelectric power station has no restrictions on location. This means that supersized/large-sized/medium-sized/small-sized hydroelectric power stations can be numerously/countlessly/considerably installed.
An operation time of the power station can also be limitless (24 hours a day, 365 days a year). Consequently, the electric power of the hydroelectric power production can be increased 1,000 times or more than current days.
2. Cheap electric power is supplied.
The power station can be installed immediately next to a place (factory, home, school, quay, hospital, farm, or the like) where electric power is used, and thus transmission costs is significantly reduced to decrease an electric fee.
3. Pollution of the earth is improved, and the environment of the earth is improved.
As a result of 1, pollution-free hydroelectric power is infinitely produced, and thus the earth can enjoy a cleaner environment. The thermal power production is significantly reduced such that $CO_2$ and fine dust is significantly reduced. Finally, unusual weather disappears, and the earth has a clear and cool environment. Consequently, the earth becomes healthy.
4. The nuclear power production is ended such that the safe earth is made.
As a result of 1 and 2, the nuclear power production is ended such that the safe earth is made.
5. Extension of Earth Life
As a result of 1 to 4, the clear and clean earth which is good for mankind to live on is maintained forever.

**(4) Brief Description of Drawings and Reference Signs List**

FIG. 1: a view of water flow in a case of one inclined pipe 3
FIG. 2: a view of water flow in a case of N inclined pipes 3

Reference Signs List

1.   Upper Tank

2.   Valve A

3.   Inclined Pipe

4.   Horizontal Pipe

5.   Lower Tank

6.   Riser Pipe

7.   Pump

8.   Valve B

Reference Signs Exclusive for FIG. 2

21.     Valve A for First Inclined Pipe

22.     Valve A for Second Inclined Pipe

2N.     Valve A for N-th Inclined Pipe

31.     First Inclined Pipe

32.     Second Inclined Pipe

3N.     N-th Inclined Pipe

End of Reference Signs List

**(5) Preferred Embodiments for Carrying out the Invention or Embodiments for Carrying out the Invention**

The power station of the present invention has a simple structure as illustrated in FIGS. 1 and 2, and thus there is no need to describe preferred embodiments. With consideration for required electric power and an area and a shape of land, generators and the number of generators in FIG. 1 or 2 are determined, a size and the number of each part are determined, and the power station is installed.
Table 1 illustrates ten generators as samples and thus can be used just as reference, and 50 to 100 or more generators can be installed as necessary. Then, the total amount of power generation is remarkably increased.

**(6) Industrial Applicability**

1. Installation is very easy.

2. Basically, installation costs are low, and the construction costs compared to effects of a power station are further lower.

3. The power station, to which the present invention is applied, has no restrictions on installation location and is reduced in costs for land, countless (globally 100,000,000 or more large-sized/medium-sized/small-sized in total) power stations can be installed, and the hydroelectric power production causes no environmental pollution.

The hydroelectric power station can be easily used and be welcome anywhere on the earth, because of reasons in 1 to 3 described above.

**(7) Sequence Listing**

**(8) Free Text of Sequence Listing**

**Claims**

**1.**   A power station comprising:

a pipe installed such that both ends have different heights; and
multiple generators that are installed inside the pipe in advance and are operated to generate a large amount of electric power, while water is continuously supplied into an end of the pipe at a higher side and continuously flows from the end of the pipe at the higher side to an end of the pipe at a lower side due to a difference in height between both ends of the pipe,
wherein a total amount of produced electric power is larger than electric power which is consumed to pump water discharged from the end of the pipe on the lower side up to an original higher position.

**2.**   A power station comprising:

multiple generators that are installed continuously inside a pipe,
wherein power generation significantly increases in amount by allowing water to continuously flow from a higher side of the pipe to a lower side of the pipe such that the flowing water turns a generator water turbine, then, flows again to a water turbine next to the generator water turbine and turns the next water turbine, continuously turns a water turbine next thereto, and finally turns all water turbines inside the pipe.

**3.** A power station,

wherein, when power production is performed by allowing water to flow from a higher side of a pipe to a lower side of the pipe, an additional pipe is connected to a pipe used for supplying water to water turbines (hereinafter, abbreviated to a 'main pipe'), and
wherein water is additionally supplied to the main pipe from the additional pipe to increase a flow rate and a flow velocity of the main pipe such that power generation increases in amount, or conversely, the water additionally supplied to the main pipe from the additional pipe is blocked to decrease the flow rate and the flow velocity of the main pipe such that power generation decreases in amount, and thereby an amount of power generation is adjustable.

**Amended claims under Art. 19.1 PCT**

**1.** A pumped-storage hydroelectric power station or a hydroelectric power station comprising:

a pipe installed such that both ends have different heights,
wherein, while water is continuously supplied into an end of the pipe at a higher side and continuously flows from the end of the pipe at the higher side to an end of the pipe at a lower side due to a difference in height between both ends of the pipe, multiple generators installed inside the pipe are operated and produce a sum of power generation inside pipe, and a total of the sum of power generation inside pipe and power generation outside pipe obtained by using water discharged from the end of the pipe at the lower side to atmosphere is to be larger than electric power which is consumed to pump water discharged from the end of the pipe on the lower side up to an original higher position.

**2.** The pumped-storage hydroelectric power station or the hydroelectric power station according to claim 1,
wherein an additional separated water supply pipe is provided between multiple generators installed inside the pipe, and water is additionally supplied such that a flow rate inside the pipe is increased to increase total electric power generation inside pipe.

**Amended claims under Art. 19.1 PCT**

**1.** The applied claims 1 and 2 are changed to claims 1 and 2 on the replacement page.

**2.** Additionally, the applied claim 3 is canceled.

**FIG. 1**

*** WATER FLOWS COUNTERCLOCKWISE ***

high end

low end

WIRE

h1

h2

: WATER TURBINE

: GENERATOR

: GENERATION SET

....... : Meaning that multiple generation sets are installed continuously

Water turbine for power generation outside pipe

Generator outside pipe

FIG. 2

*** WATER FLOWS COUNTERCLOCKWISE ***

high end

low end

h1

h2

| | : WATER TURBINE | ■ : GENERATOR |

| | : GENERATION SET |

✽✽✽✽✽ : Meaning that multiple inclined plates are installed continuously

..... : Meaning that multiple generation sets are installed continuously

Water turbine for power generation outside pipe

Generator outside pipe

EP 4 001 633 A1

## INTERNATIONAL SEARCH REPORT

International application No.

**PCT/KR2019/008728**

| A. | CLASSIFICATION OF SUBJECT MATTER |
|---|---|

*F03B 13/08(2006.01)i, F03B 13/06(2006.01)i, F03B 17/06(2006.01)i, F03B 11/00(2006.01)i*

According to International Patent Classification (IPC) or to both national classification and IPC

| B. | FIELDS SEARCHED |
|---|---|

Minimum documentation searched (classification system followed by classification symbols)
F03B 13/08; F03B 1/02; F03B 11/00; F03B 13/00; F03B 13/06; F03B 15/18; F03B 17/04; F03B 7/00; F03B 17/06

Documentation searched other than minimum documentation to the extent that such documents are included in the fields searched
Korean utility models and applications for utility models: IPC as above
Japanese utility models and applications for utility models: IPC as above

Electronic data base consulted during the international search (name of data base and, where practicable, search terms used)
eKOMPASS (KIPO internal) & Keywords: power generation, waterwheel, pipe, electric power

| C. | DOCUMENTS CONSIDERED TO BE RELEVANT |
|---|---|

| Category* | Citation of document, with indication, where appropriate, of the relevant passages | Relevant to claim No. |
|---|---|---|
| X | KR 10-2008-0109703 A (AN, Jong Yong) 17 December 2008<br>See abstract and claim 1. | 1-2 |
| Y | | 3 |
| Y | KR 10-2014-0058068 A (KIM, Kookjin) 14 May 2014<br>See claim 1 and figure 2. | 3 |
| A | KR 10-2007-0085188 A (JO, Jang Mun) 27 August 2007<br>See claim 1. | 1-3 |
| A | JP 2012-077618 A (LIN, Chen-zhang) 19 April 2012<br>See claim 1. | 1-3 |
| A | KR 10-1825845 B1 (PARK, Jong-chi) 22 March 2018<br>See claim 1. | 1-3 |

☐ Further documents are listed in the continuation of Box C.    ☒ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 10 APRIL 2020 (10.04.2020) | **10 APRIL 2020 (10.04.2020)** |

| Name and mailing address of the ISA/KR | Authorized officer |
|---|---|
| Korean Intellectual Property Office<br>Government Complex Daejeon Building 4, 189, Cheongsa-ro, Seo-gu,<br>Daejeon, 35208, Republic of Korea<br>Facsimile No. +82-42-481-8578 | Telephone No. |

Form PCT/ISA/210 (second sheet) (January 2015)

**14**

INTERNATIONAL SEARCH REPORT
Information on patent family members

International application No.

**PCT/KR2019/008728**

| Patent document cited in search report | Publication date | Patent family member | Publication date |
|---|---|---|---|
| KR 10-2008-0109703 A | 17/12/2008 | None | |
| KR 10-2014-0058068 A | 14/05/2014 | None | |
| KR 10-2007-0085188 A | 27/08/2007 | KR 20-0424078 Y1 | 16/08/2006 |
| JP 2012-077618 A | 19/04/2012 | None | |
| KR 10-1825845 B1 | 22/03/2018 | CN 109964027 A | 02/07/2019 |
| | | JP 2019-535964 A | 12/12/2019 |
| | | US 2020-0063706 A1 | 27/02/2020 |
| | | WO 2018-097544 A1 | 31/05/2018 |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

• Power Generation Hydroelectric Exercises supervised by Power Generation Division of KEPCO. Gumi Technology, 10 July 1994